# EUROPEAN PATENT APPLICATION

(11) **EP 1 630 801 A1**
(43) Date of publication of application: **01.03.2006**
(21) Application number: 04716364.7
(22) Date of filing: 02.03.2004
(51) Int. Cl.: G11B 7/24, G11B 7/26

(54) **OPTICAL INFORMATION RECORDING MEDIUM AND PROCESS FOR PRODUCING THE SAME**

(30) Priority: 23.05.2003 JP 2003146207
(71) Applicant: MATSUSHITA ELECTRIC INDUSTRIAL CO., LTD., Kadoma-shi, Osaka 571-8501 (JP)
(72) Inventor: HABUTA, Haruhiko, x (JP); NAGATA, Ken'ichi, x (JP)
(74) Representative: Eisenführ, Günther
(86) International application number: PCT/JP2004/002585
(87) International publication number: WO 2004/105008

(57) **Abstract**

An optical information recording medium having a surface excellent in flatness in which inter-mark interference is suppressed during recording operation, and its producing process. In the optical information recording medium (10) capable of reproducing information using laser light, a reflective layer (2) and a recording layer (5) are formed sequentially on a substrate (1) wherein the reflective layer (2) is formed of an alloy containing Al and Ni.

## Description

### TECHNICAL FIELD

This invention relates to a multilayer optical information recording medium for recording, erasing, rewriting, and reproducing information optically to a plurality of information layers by means of irradiation with laser light or the like.

### BACKGROUND ART

A phase-change optical information recording medium records, erases, and rewrites information by utilizing a recording layer that undergoes reversible phase transformations between a crystal phase and an amorphous phase. When the recording layer is rapidly cooled after being irradiated with high-power laser light, the irradiated portion becomes an amorphous phase, and when the amorphous portion of the recording layer is slowly cooled after being irradiated with low-power laser light, the irradiated portion becomes a crystal phase. Therefore, with a phase-change optical information recording medium, the recording layer can be freely changed to either an amorphous phase or a crystal phase by irradiating the recording layer with laser light whose power has been modulated between high and low power levels. Such an optical information recording medium reproduces information by utilizing the difference between the reflectance in the amorphous phase and the reflectance in the crystal phase.

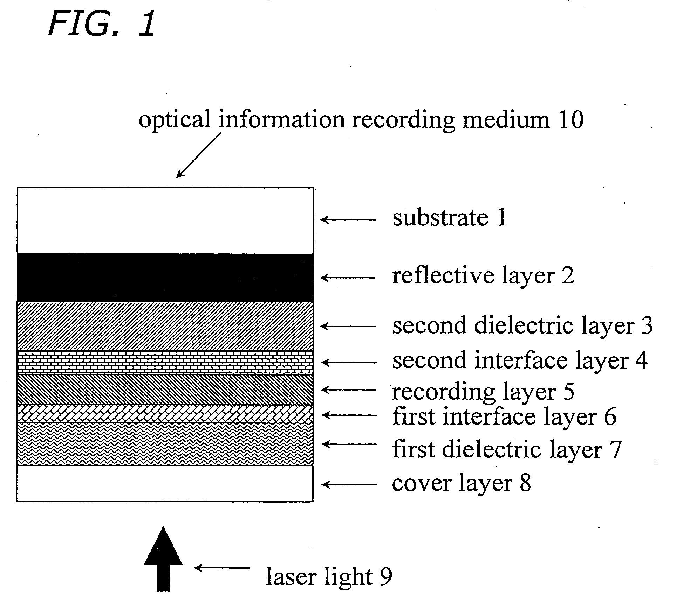

A phase-change optical information recording medium typically has the multilayer film configuration shown in FIG. 1, for example. (FIG. 1 illustrates an embodiment of the present invention, but is used here to describe prior art.) Specifically, this optical information recording medium comprises a reflective layer 2, a second dielectric layer 3, a second interface layer 4, a recording layer 5, a first interface layer 6, and a first dielectric layer 7, which are laminated in that order, by sputtering, vapor deposition, or another such method, on a substrate 1 made from glass, a resin such as a polycarbonate or polymethyl methacrylate (PMMA), or the like.

ZnS-SiO₂ is typically used for the second dielectric layer 3 and the first dielectric layer 7. These dielectric layers serve to adjust the reflectance, absorbance, and so forth of the disk by optical interference effect, and also serve to prevent thermal damage to the substrate and the evaporation of the recording layer.

The roles of the second interface layer 4 and the first interface layer 6 are to promote crystallization in the recording layer 5 and thereby improve erasure characteristics, and to prevent the diffusion of atoms between the recording layer 5 and the dielectric layers 3 and 7 and thereby improve performance over repeated use.

The reflective layer 2 is composed of an alloy material with high thermal conductivity, and not only reflects laser light and increases the efficiency at which light is utilized, but also serves as a thermal diffusion layer for quickly dispersing any heat generated by the recording layer 5. The material of the reflective layer 2 can be, for example, a single metal material with high thermal conductivity, such as aluminum or silver, or it may contain one or more such elements, and may contain one or more elements that are added in order to improve moisture resistance, adjust thermal conductivity, or adjust optical reflectance, optical absorbance, and optical transmittance. More specifically, alloy materials such as Al-Cr, Al-Ti, Ag-Pd, Ag-Pd-Cu, and Ag-Pd-Ti can be used. However, when a silver alloy is used for the reflective layer 2, if the silver comes into contact with the ZnS-SiO₂ of the second dielectric layer 3, the silver and sulfur will react, resulting in corrosion. One way to prevent this is to insert a barrier layer between the second dielectric layer 3 and the reflective layer 2 (Japanese Laid-Open Patent Application 2002-237098).

Also, a basic way to increase the amount of information that can be stored per optical information recording medium is to increase the recording surface density of the optical information recording medium by shortening the wavelength of the laser light, or increasing the numerical aperture NA of the objective lens that converges the laser light, thereby decreasing the spot diameter of the laser light. Blue lasers with a wavelength of about 400 nm have been approaching the practical stage in recent years. It has been proposed that a laser spot diameter can be decreased and the recording surface density increased by applying a blue laser to an optical system that records and reproduces to and from an optical information recording medium, and raising the numerical aperture NA of the objective lens of the optical system (such as raising it from the 0.60 used with a DVD-RAM or the like to about 0.85). Also, since raising the numerical aperture NA of the lens decreases the allowable range for the tilt of the optical information recording medium, it has been proposed that the thickness of a cover layer on the side on which the laser light is incident be reduced from the 0.6 mm used with a DVD-RAM or the like to about 0.1 mm. Even when the cover layer is made thinner, a substrate of 1.1 mm has to be used to bring the disk thickness to the same 1.2 mm as with a DVD-RAM. In this case, from the standpoint of the stability of the substrate in film formation, the films are generally formed in the order of reflective layer, dielectric layer, recording layer, and dielectric layer, on a substrate of 1.1 mm.

When the price of the optical information recording medium is taken into account, it is preferable to minimize the number of its constituent layers, as the elimination of even a single layer is advantageous. Specifically, providing a barrier layer between the second dielectric layer 3 and the reflective layer 2 as in Japanese Laid-Open Patent Application 2002-237098 drives up the cost of the optical information recording medium. With this in mind, the inventors thought of using an aluminum alloy for the reflective layer. The following problems are encountered when this is done.
(1) Because aluminum is a material that tends to assume a columnar structure, the surface tends to be uneven.
(2) Because an aluminum alloy has a lower thermal conductivity than a silver alloy, there is considerable inter-mark interference during recording.

Nevertheless, the crystal growth characteristics and thermal conductivity of an aluminum alloy vary with the elements that are added. Appropriately selecting these elements can yield a disk with less inter-mark interference during recording caused by a reflective layer with high thermal conductivity, and a disk with high surface flatness and low noise characteristics, which could not be obtained in the past.

### DISCLOSURE OF THE INVENTION

A primary object of the present invention is to provide an optical information recording medium that solves the above problems, and to provide an optical information recording medium with fewer layers, low noise, and less inter-mark interference during recording, as well as a method for manufacturing this medium.

The optical information recording medium for achieving the stated object is an optical information recording medium capable of reproducing information using laser light, having at least a reflective layer and a recording layer, in that order, on a substrate, and the reflective layer being an aluminum alloy containing at least 1 atom percent and no more than 5 atom percent nickel.

The method for manufacturing an optical information recording medium for achieving the stated object is a method for manufacturing an optical information recording medium, including producing at least a reflective layer and a recording layer, in that order, on a substrate, wherein producing a film of the reflective layer involves the use of a sputtering target composed of an alloy containing at aluminum and nickel.

When an aluminum alloy is used as a reflective layer, the layer tends to be uneven because aluminum tends to assume a columnar structure. Thus, a second component had to be introduced into the aluminum alloy to reduce surface unevenness, which affects noise characteristics. However, when the second component was added to the aluminum alloy, many elements used as the second components led to a large decrease in the thermal conductivity of the aluminum alloy. This led to problems with inter-mark interference during recording. However, if an aluminum alloy containing aluminum and nickel is used as the reflective layer, it is possible to realize an optical information recording medium with excellent surface flatness of the reflective layer and little inter-mark interference during recording, as well as a method for manufacturing this medium.

The reflective layer is preferably an aluminum alloy containing at least 1 atom percent and no more than 10 atom percent nickel. In this case, the surface flatness of the reflective layer will be enhanced, and there will be less inter-mark interference during recording.

Even more preferably, the reflective layer is an aluminum alloy containing at least 1 atom percent and no more than 5 atom percent nickel. In this case, there will be even less inter-mark interference during recording.

To manufacture an optical information recording medium whose cover layer is extremely thin, the film formation on the substrate preferably starts with the reflective layer. In general, an aluminum alloy used for a reflective layer will have poor surface flatness because it tends to assume a columnar structure. As a result, the flatness of the recording layer formed over the reflective layer also suffers, resulting in greater noise during recording and reproduction. To prevent this, nickel is added to the aluminum in the present invention, which flattens out the reflective layer and reduces noise.

The thickness of the reflective layer is preferably at least 20 nm and no more than 300 nm. This range allows sufficient contrast to be obtained without raising the cost of the material.

The optical information recording medium preferably further comprises a cover layer, a reflective layer-side dielectric layer disposed between the reflective layer and the recording layer, and an incident light-side dielectric layer disposed between the recording layer and the cover layer. These dielectric layers serve to adjust the reflectance, absorbance, and so forth of the disk by optical interference effect, and also serve to prevent thermal damage to the substrate and the evaporation of the recording layer.

The reflective layer-side dielectric layer preferably contains sulfur. In general, when silver is used in the reflective layer, corrosion occurs if the silver alloy comes into contact with ZnS-SiO₂, which is an excellent material containing sulfur, so a barrier layer is necessary to suppress corrosion. With the present invention, there is no need to provide a barrier layer because an aluminum alloy is used for the reflective layer, and no corrosion occurs.

Preferably, the main component of the reflective layer-side dielectric layer is ZnS or an oxide, the main components of the recording layer are germanium and antimony, or germanium, bismuth, and tellurium, and the main component of the incident light-side dielectric layer is ZnS or an oxide. For example, ZnS-SiO₂, which is a mixture of ZnS and SiO₂, is particularly good as the material for the first dielectric layer 7. Also, the repeated recording and erasure performance will be good when the main components of the recording layer are germanium, antimony, and tellurium, and the repeated high-speed recording and erasure performance will be good when the main components are germanium, bismuth, and tellurium.

It is preferable if the thickness of the reflective layer-side dielectric layer is at least 15 nm and no more than 50 nm, the thickness of the recording layer is at least 5 nm and no more than 15 nm, and the thickness of the incident light-side dielectric layer is at least 10 nm and no more than 100 nm. With the reflective layer-side dielectric layer, the repeated recording and erasure performance does not decrease, and furthermore there tends to be ample reflectance. With the incident light-side dielectric layer, the optical absorbance of the recording layer is sufficiently high, and optical reflectance is also higher. With the recording layer, a satisfactory carrier to noise ratio can be obtained.

The reflective layer-side dielectric layer is preferably in contact with the reflective layer. In this case, there is no need for a barrier layer between the reflective layer-side dielectric layer and the reflective layer, and the number of layers of the optical information recording medium can be reduced.

### BRIEF DESCRIPTION OF THE DRAWINGS

FIG. 1 is a cross section of an example of the configuration of the optical information recording medium of the present invention;
FIG. 2 is a cross section of an example of the configuration of the optical information recording medium of the present invention; and
FIG. 3 is a schematic of part of the configuration of a recording and reproduction device used for recording and reproducing to and from the optical information recording medium of the present invention.

### BEST MODE FOR CARRYING OUT THE INVENTION

Embodiments of the present invention will now be described in specific terms through reference to the drawings. The following embodiments are merely examples, and the present invention is not limited to these embodiments. Also, those components that are the same in the following embodiments are numbered the same and may not be described redundantly.

### Embodiment 1

In Embodiment 1, an example of the optical information recording medium of the present invention will be described.

FIG. 1 is a cross section, in the radial direction, of the optical information recording medium 10 (optical disk) pertaining to an embodiment of the present invention, and illustrates the simplified layer configuration. This optical information recording medium 10 comprises a plurality of information layers. As shown in FIG. 1, with the optical information recording medium 10, a substrate 1, reflective layer 2, second dielectric layer 3, second interface layer 4, recording layer 5, first interface layer 6, first dielectric layer 7, and cover layer 8 are stacked in that order. Electron beam vapor deposition, sputtering, CVD, laser sputtering, or another such method can be employed as the method for forming the various layers, such as the reflective layer 2, second dielectric layer 3, second interface layer 4, recording layer 5, first interface layer 6, and first dielectric layer 7. With the structure described above, the second dielectric layer 3 is in contact with the reflective layer 2, and no other layer (such as a barrier layer) is formed between the two.

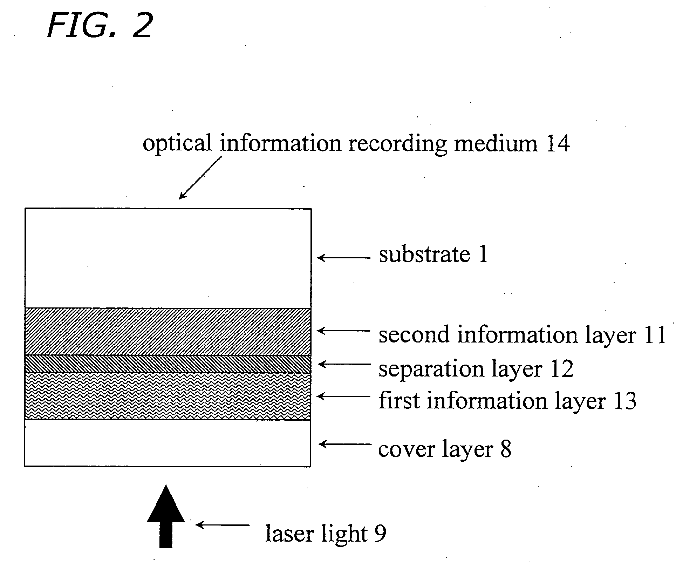

As shown in FIG. 2, an optical information recording medium 14 of the present invention comprises a second information layer 11, a separation layer 12, a first information layer 13, and a cover layer 8, provided in that order on a substrate. There are two information layers in FIG. 2, but additional information layers may be provided via separation layers. Here, at least the closest information layer to the substrate (such as the second information layer 11) is configured the same as the layer configuration shown in FIG. 1, in which at least a reflective layer, a second dielectric layer, a second interface layer, a recording layer, a first interface layer, and a first dielectric layer are provided to a substrate in that order, starting at the side closest to the substrate. Similarly, an information layer other than the closest information layer to the substrate (such as the first information layer 13) is configured the same as the layer configuration shown in FIG. 1, in which at least a reflective layer, a second dielectric layer, a second interface layer, a recording layer, a first interface layer, and a first dielectric layer are provided to a substrate in that order, starting at the side closest to the substrate. Modifications will have to be made here, however, such as omitting the reflective layer from the first information layer or making the reflective layer of the first information layer thinner (such as a film thickness of 20 nm or less) so that sufficient transmittance will be obtained, or providing a high optical interference layer to the substrate side of the reflective layer so that the refractive index will be high (such as at least 2.2) in order to increase transmittance. Recording and reproduction are performed by irradiating the information layers 11 and 13 of these optical information recording media 14 with laser light 9 from the cover layer 8 side. Recording and reproduction of the second information layer 11 are performed with the laser light 9 transmitted by the first information layer 13.

The first information layer 13 or the second information layer 11 may be a read-only type of information layer (ROM; Read Only Memory), or may be a write-once (WO) type of information layer that can be written to one time.

The spot diameter when the laser light 9 is converged is determined by the wavelength λ of the laser light 9 (the shorter the wavelength λ, the smaller the diameter to which the spot can be converged), so when an optical information recording medium that performs high-density recording is used, it is particularly favorable for the wavelength λ to be 450 nm or less. There will be considerable light absorption by the first substrate 1, the resin used for the separation layer 12, and the like if the wavelength λ is less than 350 nm, so the range is preferably from 350 to 450 nm.

The various constituent components of the optical information recording medium will now be described.

The material used for the substrate 1 can be a transparent disk made of a polycarbonate resin, polymethyl methacrylate (PMMA) resin, polyolefin resin, norbomene resin, UV-curing resin, glass, or a suitable combination of these, for example. The substrate 1 may have a guide groove formed in it for guiding the laser light as needed. The side of the substrate 1 that is on the opposite side from the reflective layer 2 is preferably smooth. The thickness of the substrate 1 is preferably between 400 and 1300 µm so that it will be strong enough and so the thickness of the optical information recording media 10 and 14 will be about 1200 µm. If the thickness of the cover layer 8 is about 600 µm (good recording and reproduction will be possible when the NA of the objective lens used in the recording and reproduction in Embodiment 3 is 0.6), a preferred range is 550 to 650 µm. If the thickness of the cover layer is about 100 µm (good recording and reproduction will be possible when the NA is 0.85), a preferred range is 1050 to 1150 µm.

The material used for the cover layer 8 is preferably one that does not absorb much light at the wavelength of the laser light 9 being used, and whose optical birefringence is low in the short wavelength region. A transparent disk made of a material that satisfies these conditions can be used, such as a polycarbonate resin, polymethyl methacrylate resin, polyolefin resin, norbomene resin, UV-curing resin, glass, or a suitable combination of these. There are no particular restrictions on the thickness of the cover layer 8, but about 0.01 to 1.5 mm is preferable, and when the NA is 0.85, it is even more preferable for the thickness to be 0.2 mm or less, since the allowable range for tilt will be narrower.

The material used for the separation layer 12 can be the same as that of the cover layer 8, namely, a transparent disk made of a polycarbonate resin, polymethyl methacrylate resin, polyolefin resin, norbomene resin, UV-curing resin, glass, or a suitable combination of these, for example.

The thickness of the separation layer 12 must be greater than or equal to the focal depth determined by at least the wavelength λ of the laser light 9 and the numerical aperture NA of the objective lens 15, so that there will be less crosstalk from elsewhere during the reproduction of either the first information layer 13 or the second information layer 11. Also, the separation layer 12 must be thick enough that all of the information layers will be within the range in which optical convergence is possible. For instance, when λ = 405 nm and NA = 0.85, the thickness of the separation layer 12 must be at least 5 µm and no more than 50 µm. The separation layer 12 may have a guide groove formed in its surface where the laser light 9 is incident for guiding the laser light 9.

The first dielectric layer 7 serves to prevent oxidation, corrosion, and deformation of the recording layer 5, to improve the optical absorption efficiency of the recording layer 5 by adjusting the optical distance, and to increase signal amplitude by increasing the change in the amount of reflected light before and after recording. SiOₓ (where x is 0.5 to 2.5), Al₂O₃, TiO₂, Ta₂O₅, ZrO₂, ZnO, Te-O, or another such oxide can be used for the first dielectric layer 7. C-N, Si-N, Al-N, Ti-N, Ta-N, Zr-N, Ge-N, Cr-N, Ge-Si-N, Ge-Cr-N, or another such nitride can also be used. ZnS or another such sulfide, or SiC or another such carbide can also be used. A mixture of the above materials can also be used. For example, ZnS-SiO₂, which is a mixture of ZnS and SiO₂, is particularly good as the material of the first dielectric layer 7. ZnS-SiO₂ is an amorphous material and has a high refractive index, a high film formation rate, good mechanical properties, and good moisture resistance.

The thickness of the first dielectric layer 7 can be precisely determined by calculations based on the matrix method (see, for example, Hiroshi Kubota, "Wave Optics," Iwata Shoten, 1971, Chapter 3) so as to satisfy the requirement that there be a large change in the amount of reflected light between when the recording layer 5 is a crystal phase and when it is an amorphous phase.

The thickness of the first dielectric layer 7 is preferably at least 10 nm and no more than 100 nm. As the first dielectric layer 7 becomes thinner, the optical absorbance of the recording layer 5 decreases. Accordingly, there will be a pronounced decrease in recording sensitivity if the thickness of the first dielectric layer 7 is less than 10 nm. On the other hand, the optical reflectance of the optical information recording medium 10 decreases when the recording layer 5 is in crystalline form as the first dielectric layer 7 becomes thicker. Consequently, the lack of reflectance becomes pronounced when the thickness of the first dielectric layer 7 goes over 100 nm.

The second dielectric layer 3 serves to improve the optical absorbance of the recording layer 5 by adjusting the optical distance, and to increase signal amplitude by increasing the change in the amount of reflected light before and after recording. SiO₂, Al₂O₃, Bi₂O₃, Nb₂O₅, TiO₂, Ta₂O₅, ZrO₂, ZnO, and other such oxides can be used for the second dielectric layer 3, for example. C-N, Si-N, Al-N, Ti-N, Ta-N, Zr-N, Ge-N, Cr-N, Ge-Si-N, Ge-Cr-N, Nb-N, or another such nitride can also be used. ZnS or another such sulfide, SiC or another such carbide, or carbon can also be used. A mixture of the above materials can also be used. When a nitride is used for the second dielectric layer 3, it serves to promote the crystallization of the recording layer 5. In this case, a material containing Ge-N can be readily formed by reactive sputtering, and has excellent mechanical properties and moisture resistance. Of the above, compound nitrides such as Ge-Si-N and Ge-Cr-N are preferable. Also, ZnS-SiO₂, which is a mixture of ZnS and SiO₂, is excellent as the material used for the second dielectric layer 3 because it is an amorphous material and has a high refractive index, a high film formation rate, good mechanical properties, and good moisture resistance.

The thickness of the second dielectric layer 3 can be precisely determined by calculations based on the matrix method, just as with the first dielectric layer 7, so as to satisfy the requirement that there be a large change in the amount of reflected light between when the recording layer 5 is a crystal phase and when it is an amorphous phase.

The thickness of the second dielectric layer 3 is preferably at least 15 nm and no more than 50 nm. If the thickness of the second dielectric layer 3 is less than 15 nm, there will be only a narrow gap between the recording layer 5 and the substrate 1. Consequently, the substrate 1 will be more susceptible to the effect of elevated temperature of the recording layer 5. Specifically, the temperature change produced when the recording layer 5 is irradiated with a laser to record information brings about deformation of the guide groove of the substrate 1. Consequently, repeated recording and erasure performance will suffer markedly if the thickness of the second dielectric layer 3 is less than 15 nm. On the other hand, as the second dielectric layer 3 becomes thicker, there is a decrease in the optical absorbance of the optical information recording medium 10 when the recording layer 5 is in crystalline form. Consequently, the lack of reflectance becomes pronounced when the thickness of the second dielectric layer 3 goes over 50 nm.

The first interface layer 6 serves to prevent mass transfer that would otherwise occur between the recording layer 5 and the first dielectric layer 7 as a result of repeated recording. In this case, the first interface layer 6 can be made, for example, from an oxide of titanium, zirconium, hafnium, vanadium, niobium, tantalum, chromium, molybdenum, tungsten, silicon, or the like, or a compound oxide or a composite oxide of these, C-N, Ti-N, Zr-N, Nb-N, Ta-N, Si-N, Ge-N, Cr-N, Al-N, Ge-Si-N, Ge-Cr-N, or another such nitride, or an oxynitride containing these, carbon, or a carbide of titanium, zirconium, hafnium, vanadium, niobium, tantalum, chromium, molybderum, tungsten, silicon, or the like. If the first interface layer 6 is too thick, there will be a large change in reflectance or absorbance, and recording and erasure performance will be affected. It is therefore preferable for the thickness of the first interface layer 6 to be between 1 and 10 nm, with a range of 2 to 5 nm being even better.

When the second interface layer 4 is disposed between the recording layer 5 and the second dielectric layer 3, one of the materials described for the first interface layer 6 can be used for the second interface layer 4. The thickness of the second interface layer 4 is preferably at least 0.3 nm and less than 5 nm in order to obtain good signal quality through a large reflectance change and high reproduction light durability.

The recording layer 5 may be a substance that undergoes a structural change between a crystalline state and an amorphous state, such as a phase-change material whose main component is tellurium, indium, selenium, or the like. Examples of the main components of well known phase-change materials include Te-Sb-Ge, Te-Ge, Te-Ge-Sn, Te-Ge-Sn-Au, Sb-Se, Sb-Te, Sb-Se-Te, In-Te, In-Se, In-Se-Tl, In-Sb, In-Sb-Se, In-Sb-Te, In-Se-Te, Te-TeO₂, Te-TeO₂-Au, and Te-TeO₂-Pd. Of these materials, materials with good repeated recording and erasure performance, and compositions of these materials, were examined experimentally, which revealed that a material whose main components are the three elements germanium, antimony, and tellurium is preferable. If we express the atomic weight ratio of the elements as GeₓSb_{y}Te_{z}, then compositions expressed by 0.1 ≤ x ≤ 0.6, y ≤ 0.6, and 0.4 ≤ z ≤ 0.65 (where x + y + z = 1) are particularly excellent. It was found that the repeated high-speed recording and erasure performance is particularly good when the main components of the recording layer 5 are germanium, bismuth, and tellurium.

A satisfactory carrier to noise ratio (CNR) can be obtained if the thickness of the recording layer 5 is at least 5 nm and no more than 15 nm. If the thickness of the recording layer 5 is less than 5 nm, sufficient reflectance and change in reflectance will not be obtained, so the CNR will be low, but if the thickness is over 15 nm, there will be considerable heat diffusion within the thin film plane of the recording layer 5, so the CNR will end up being low in high-density recording.

One or more elements selected from among oxygen, nitrogen, fluorine, carbon, sulfur, and boron can be added as needed to the recording layer 5 in an amount of no more than 10 atom percent with respect to the entire recording layer 5, for the purpose of adjusting the thermal conductivity, optical constant, or the like, increasing heat resistance and environmental reliability, and so forth.

The reflective layer 2 has the optical function of increasing the amount of light absorbed by the recording layer 5. The reflective layer 2 also has the thermal function of quickly diffusing heat produced by the recording layer 5 so that the recording layer 5 can be rendered amorphous more readily. The reflective layer 2 further has the function of protecting the multilayer film from the environment in which it is used. An aluminum alloy is used for this reflective layer 2. An advantage to an aluminum alloy, as opposed to silver, is that it does not readily corrode even when ZnS or ZnS-SiO₂ is used for the second dielectric layer 3. This means that there is no need to provide a barrier layer, which helps keep the cost low.

As discussed above, the following two problems are encountered when an aluminum alloy is used as a reflective layer.
(1) Because aluminum is a material that tends to assume a columnar structure, the surface tends to be uneven.
(2) Since an aluminum alloy has a lower thermal conductivity than a silver alloy, there is considerable inter-mark interference during recording.

To solve these problems, dopants can be added to aluminum, and then the columnar structure can be suppressed and surface unevenness can be reduced. However, when a second component was added to a conventional aluminum alloy, thermal conductivity sometimes decreased, in which case the problem was that there was a great deal of inter-mark interference during recording. In view of this, the inventors looked for a second component that would not decrease thermal conductivity when added to an aluminum alloy. The second components they examined were titanium vanadium, chromium, manganese, magnesium, and nickel. Of these, with an alloy containing above-mentioned as its main component and nickel as a second component, as in the present invention, adding the nickel reduced surface unevenness and also allowed a high thermal conductivity to be maintained, which means that both of the above-mentioned two problems were solved.

The thickness of the reflective layer 2 is preferably at least 20 nm and no more than 300 nm, as discussed below. It is undesirable for the reflective layer 2 to be less than 20 nm thick because the reflectance of the crystal portion will decrease 2 to 3%. On the other hand, there will be no further increase in the reflectance of the crystal portion if the reflective layer 2 is more than 300 nm thick, so there is no point in making the reflective layer 2 thicker than this. Accordingly, from a productivity standpoint, making the reflective layer 2 thicker than 300 nm is undesirable in terms of the cost of the materials.

The materials and composition of the various layers of the above-mentioned multilayer thin film can be examined by methods such as Auger electron spectroscopy, X-ray photoelectron spectroscopy, and secondary ion mass spectroscopy (see, for example, "Handbook of Thin Film Production [*Hakumaku Sakusei Handobukku*]," edited by the Applied Physics Society / Thin-Film Surface Physics Department Society [*Oyo Butsuri Gakkai* / *Hakumaku Butsuri Bunka Gakkai*], Kyoritsu Publishing Co., 1991).

The optical information recording medium 10 of Embodiment 1 can be manufactured by the method described in Embodiment 2 below.

### Embodiment 2

The method for manufacturing the optical information recording medium 10 of the present invention will be described in Embodiment 2. A substrate 1 (1.1 mm thick, for example) in which a guide groove for guiding laser light 9 is placed in a film formation apparatus. The film formation apparatus entails forming the reflective layer 2 of the present invention (step 1), forming a second dielectric layer 3 (step 2), forming a second interface layer 4 (step 3), forming a recording layer 5 (step 4), forming a first interface layer 6 (step 5), and forming a first dielectric layer 7 (step 6), with these layers being formed in the above order.

First; in step 1 of the present invention, the reflective layer 2 is formed on the substrate 1 (on the side where the guide groove was formed). In step 1, a sputtering target composed of an Al-Ni alloy material is sputtered by using a DC or high-frequency power supply and introducing argon gas. The sputtering target is an aluminum alloy containing at least 1.0 atom percent and no more than 10.0 atom percent nickel, and preferably an aluminum alloy containing at least 1.0 atom percent and no more than 5.0 atom percent nickel.

Next, in step 2, the second dielectric layer 3 is formed over the reflective layer 2. In step 2, a sputtering target composed of ZnS-SiO₂ is sputtered by using a high-frequency power supply and introducing argon gas, a mixture of argon gas and N₂ gas, or a mixture of argon gas and O₂ gas.

Next, in step 3, the second interface layer 4 is formed over the second dielectric layer 3. In step 3, a sputtering target composed of carbon or the like is sputtered by using a high-frequency power supply and introducing argon gas or a mixture of argon gas and N₂ gas.

Next, in step 4, the recording layer 5 is formed over the second interface layer 4. In step 4, a sputtering target containing Ge-Sb-Te, Ge-Sn-Sb-Te, Ag-In-Sb-Te, or Sb-Te is sputtered by using a DC power supply and introducing argon gas or a mixture of argon gas and N₂ gas. After its formation, the recording layer 5 is in an amorphous state.

Next, in step 5, the first interface layer 6 is formed over the recording layer 5. In step 5, a sputtering target composed of a material containing at least one element selected from among titanium, zirconium, hafnium, niobium, tantalum, chromium, and silicon is sputtered by using a high-frequency power supply and introducing argon gas. A sputtering target composed of a material containing an oxide of silicon can also be used. A sputtering target composed of a material whose main component is ZrO₂-SiO₂-Cr₂O₃ can also be used.

Finally, in step 6, the first dielectric layer 7 is formed over the first interface layer 6. In step 6, a sputtering target composed of ZnS-SiO₂ is sputtered by using a high-frequency power supply and introducing argon gas, a mixture of argon gas and N₂ gas, or a mixture of argon gas and O₂ gas.

After the first dielectric layer 7 has been formed, the substrate 1 on which the films up to the first dielectric layer 7 have been formed is taken out of the film formation apparatus and a cover layer 8 is applied. In this application step, the substrate 1 on which the films up to the first dielectric layer 7 have been formed is put in place, and the first dielectric layer 7 is coated with a UV-curing resin by spin coating or another such method. The cover layer 8 (a polycarbonate sheet, for example) is then pressed tightly against the side coated with the UV-curing resin. Finally, to complete the application of the cover layer 8, the resin is cured by being irradiated with UV rays from the polycarbonate sheet side.

Upon completion of the application step, an initialization step is performed as needed. An initialization step involves irradiating the optical information recording medium 10 with laser light, for instance, which crystallizes the recording layer 5 (which was in an amorphous state) by heating it to above its crystallization temperature. This initialization step may be performed prior to the application step.

The optical information recording medium 10 can be manufactured as above. The optical information recording medium 14 can be manufactured by a similar manufacturing method.

### Embodiment 3

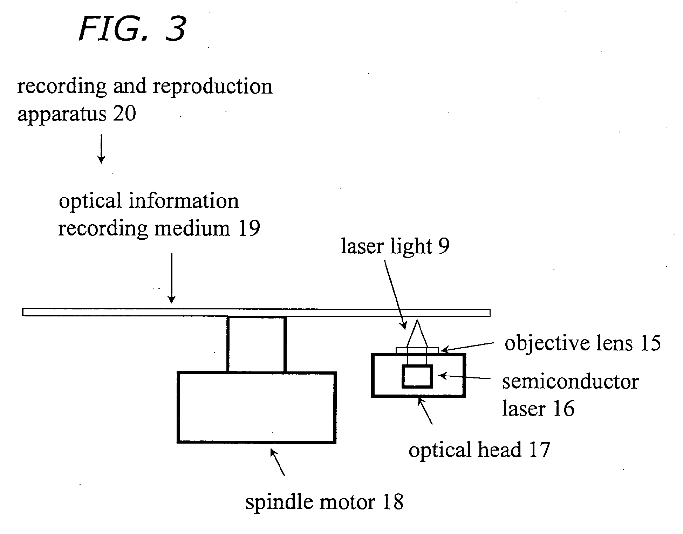

The method for recording to and reproducing from the optical information recording medium (10 or 14) described in Embodiment 1 will be described in Embodiment 3. The recording and reproduction apparatus used for the recording and reproduction method of the present invention will be described. FIG. 3 schematically illustrates the constitution of part of the recording and reproduction apparatus 20 used in the recording and reproduction method of the present invention. Referring to FIG. 3, the recording and reproduction apparatus 20 comprises a spindle motor 18 for rotating the optical information recording medium 19, an optical head 17 equipped with a semiconductor laser 16, and an objective lens 15 for converging the laser light 9 emitted by the semiconductor laser 16.

The recording, erasure, and overwrite recording of information to and from the optical information recording medium 19 are performed by modulating the power of the laser light 9 between peak power (high power; Pp (mW)) and bias power (low power; Pb (mW)). When the optical information recording medium 19 is irradiated with the peak-power laser light 9, an amorphous phase is formed at local portions of the recording layer 5, and these amorphous phase portions serve as recording marks. The portions in between recording marks are irradiated with the bias-power laser light 9, which forms a crystal phase (erased portion). When irradiating with the peak-power laser light 9, a so-called multi-pulse is generally employed, in which the pulses are arranged in rows. A multi-pulse may be modulated just with the power level of either peak power or bias power, or it may be modulated with any power level between a range of 0 mW up to peak power.

Information signals that have been recorded to the optical information recording medium 19 are reproduced by using a detector to read signals obtained by irradiating the optical information recording medium 19 with reproduction-power (Pr (mW)) laser light 9 that is lower in power than either the peak power or bias power. The reproduction power level corresponds to an amount of light that will not affect the optical state of the recording marks in the recording layer 5 when the optical information recording medium 19 is irradiated with the laser light 9, but is sufficient for the detector to read the reflected light that becomes the signal obtained from the optical information recording medium 19.

The numerical aperture NA of the objective lens 15 is preferably between 0.5 and 1.1 (and even more preferably between 0.6 and 1.0) in order to adjust the spot diameter of the laser light to between 0.4 and 0.7 µm. The wavelength of the laser light 9 is preferably no more than 450 nm (and even more preferably between 350 and 450 nm). The linear velocity of the optical information recording medium 19 in the recording of information is preferably between 3 m/sec and 20 m/sec (and even more preferably between 4 m/sec and 15 m/sec), at which a good erasure rate will be obtained, and crystallization is less likely to be caused by reproduction light.

In the case of the optical information recording medium 14, when recording to the first information layer 13, the laser light 9 is focused on the recording layer of the first information layer, and information is recorded by the laser light 9 that passes through the cover layer 8. Reproduction is performed by using the laser light 9 that has been reflected by the recording layer of the first information layer and transmitted by the cover layer 8. When recording to the second information layer 11, the laser light 9 is focused on the recording layer of the second information layer, and information is recorded by the laser light 9 transmitted by the cover layer 8, the first information layer 13, and the separation layer 12. Reproduction is performed with the laser light 9 reflected by the recording layer of the second information layer and transmitted by the separation layer 12, the first information layer 13, and the cover layer 8.

When a guide groove for guiding the laser light 9 is formed in the substrate 1 and the separation layer 12, information may be recorded on the face (groove) closest to the side where the laser light 9 is incident, or to the face (land) farthest away. Information may also be recorded to both the grooves and the lands.

Recording performance was evaluated by recording marks with a length of 2T by (8-15) modulation, and measuring this CNR with a spectrum analyzer. Erasure performance was evaluated by recording marks with a length of 2T by (8-15) modulation, measuring the amplitude with a spectrum analyzer, overwriting marks with a length of 9T over this, measuring the amplitude of the 2T signal again, and calculating the attenuation of the 2T signal. The attenuation of the 2T signal will hereinafter be referred to as the erasure rate.

The present invention will now be described in further detail through examples.

### Example 1

Example 1 shows the recording and reproduction characteristics of the optical information recording medium 10 of the present invention, and particularly the dependence of the noise and amplitude of the 9T signal on the reflective layer material. More specifically, optical information recording media 10 were produced using different materials for the reflective layer 2, samples in which the cover layer 8 was formed were produced, and the noise and amplitude of the 9T signal were measured for these samples. The reason these signal measurements were made is that noise attributable to surface roughness of the reflective layer 2 appears in the 9T signal region.

The samples were manufactured as follows. First, a polycarbonate substrate (120 mm in diameter, 1100 µm thick, refractive index of 1.62) was readied as the substrate 1. The reflective layer 2 (80 nm thick), a ZnS-SiO₂ layer (as the second dielectric layer 3; 30 nm thick), a carbon layer (as the second interface layer 4; 2 nm thick), a GeSbTe layer (as the recording layer 5; 9 nm thick), a Zr-Si-Cr-O layer (as the first interface layer 6; 5 nm thick), and a ZnS-SiO₂ layer (as the first dielectric layer 7; 60 nm thick) were built up in that order on the polycarbonate substrate 1 by sputtering. Al-Cr, Al-Ti, and Al-Ni were used as the reflective layer 2. Finally, the first dielectric layer 7 was coated with a UV-curing resin, a polycarbonate substrate (120 mm in diameter, 90 µm thick) was pressed tightly against the first dielectric layer 7, spin coating was performed, and the resin was cured by being irradiated with UV rays, thereby forming the optical information recording medium 10. In this way, a plurality of samples were manufactured using different materials for the reflective layer 2.

Each of the samples obtained in this manner underwent an initialization step in which the recording layer 5 was crystallized at the outset. Next, the noise and amplitude of the 9T signal were measured.

The recording and reproduction apparatus 20 shown in FIG. 3 was used for signal measurement. More specifically, signal measurement was performed by rotating the sample with the spindle motor 18, converging laser light 9 with a wavelength of 405 nm on the recording layer 5 of the optical information recording medium 10, and recording and reproducing 9T-2T signals. The noise value of the 9T signal is related to the flatness of the surface of the reflective layer, and a lower value indicates better flatness. The amplitude of the 9T signal is related to the thermal conductivity of the reflective layer, and a higher value indicates better thermal conductivity.

Table 1 shows the results of measuring the noise and amplitude of 9T signals. A ⊕ rating means that the 9T signal noise was -61.5 dBm or less and the amplitude was at least -7.2 dBm, a ○ means that the 9T signal noise was -61.5 dBm or less and the amplitude was at least -7.5 dBm, and a × means that either noise or amplitude was outside these ranges.

**Table 1**

| Sample No. | Reflective layer material | 9T signal noise (dBm) | 9T signal amplitude (dBm) | Rating |
|---|---|---|---|---|
| 1-a | Al-0.3at%Cr | -60.8 | -6.4 | × |
| 1-b | Al-1.0at%Cr | -61.4 | -7.4 | × |
| 1-c | Al-2.5at%Cr | -61.7 | -8.6 | × |
| 1-d | Al-5.0at%Cr | -62.1 | -9.2 | × |
| 1-e | Al-10.0at%Cr | -62.2 | -9.5 | × |
| 1-f | Al-15.0at%Cr | -62.3 | -9.8 | × |
| 1-g | Al-0.3at%Ti | -60.7 | -6.5 | × |
| 1-h | Al-1.0at%Ti | -61.2 | -7.4 | × |
| 1-i | Al-2.5at%Ti | -61.6 | -8.6 | × |
| 1-j | Al-5.0at%Ti | -61.8 | -9.3 | × |
| 1-k | Al-10.0at%Ti | -61.9 | -9.6 | × |
| 1-l | Al-15.0at%Ti | -62.0 | -9.9 | × |
| 1-m | Al-0.3at%Ni | -61.1 | -6.4 | × |
| 1-n | Al-1.0at%Ni | -61.7 | -6.6 | ⊕ |
| 1-o | Al-2.5at%Ni | -62.1 | -6.9 | ⊕ |
| 1-p | Al-5.0at%Ni | -62.4 | -7.2 | ⊕ |
| 1-q | Al-7.5at%Ni | -62.5 | -7.3 | ○ |
| 1-r | Al-10.0at%Ni | -62.6 | -7.4 | ○ |
| 1-s | Al-15.0at%Ni | -62.7 | -7.6 | × |

As a result, it was found that when the material of the reflective layer 2 was an Al-Ni alloy, the 9T signal noise was less than -61.5 dBm and the amplitude was at least
-7.2 dBm with samples 1-n, 1-o, and 1-p, in which the nickel content was between 1.0 and 5.0 atom percent, and this tells us that a composition with a nickel content of 1.0 to 5.0 atom percent is preferable. It was also found that the 9T signal noise was less than
-61.5 dBm and the amplitude was greater than -7.5 dBm with samples 1-q and 1-r, in which the nickel content was between 7.5 and 10.0 atom percent. However, the 9T signal noise was over-61.5 dBm with sample 1-m, in which the nickel content was 0.3 atom percent, and the 9T signal amplitude was less than -7.5 dBm with sample 1-r, in which the nickel content was 20 atom percent, which means that this alloy is unsatisfactory.

It was also found that when the material of the reflective layer 2 was Al-Cr, the 9T signal noise was greater than -61.5 dBm with samples 1-a and 1-b, in which the chromium content was between 0.3 and 1.0 atom percent, and the 9T signal amplitude was less than -7.5 dBm with samples 1-c, 1-d, 1-e, and 1-f, in which the chromium content was between 2.5 and 20.0 atom percent, which means that this alloy is unsatisfactory.

Further, it was found that when the material of the reflective layer 2 was Al-Ti, the 9T signal noise was greater than -61.5 dBm with samples 1-a and 1-b, in which the chromium content was between 0.3 and 1.0 atom percent, and the 9T signal amplitude was less than -7.5 dBm with samples 1-c, 1-d, 1-e, and 1-f, in which the chromium content was between 2.5 and 20.0 atom percent, which means that this alloy is unsatisfactory.

It is clear from the above results that for good recording characteristics to be obtained, and for the 9T signal noise to be no more than -61.5 dBm and the amplitude to be at least -7.5 dBm, it is preferable to use Al-Ni (with a nickel content of 1.0 to 10.0 atom percent) as the reflective layer 2.

Furthermore, it was clear that for even better recording characteristics to be obtained, and for the 9T signal noise to be no more than -61.5 dBm and the amplitude to be at least -7.2 dBm, it is preferable to use Al-Ni (with a nickel content of 1.0 to 5.0 atom percent) as the reflective layer 2.

### Example 2

Example 2 shows the dependence of the reflective layer thickness of the optical information recording medium 10 on the reflectance of the crystal portion (of the recording layer 5). More specifically, samples composed of optical information recording media 10 of different film thickness and in which the material for the reflective layer 2 was Al-Ni were manufactured by the same method as in Example 1. Each of the samples obtained in this manner underwent an initialization step in which the recording layer 5 was crystallized, and the reflectance of the crystal portion and the amorphous portion was measured. The recording and reproduction apparatus 20 shown in FIG. 3 was used for signal measurement. More specifically, the sample was rotated with the spindle motor 18, laser light 9 with a wavelength of 405 nm was converged on the sample, and the reflectance was measured.

Table 2 shows the measurement results. A ○ rating indicates that the difference in reflectance between the crystal and amorphous portions was at least 16%, while × indicates that the difference was less than 16%.

**Table 2**

| Sample No. | Reflective layer thickness (nm) | Reflectance of crystal portion (%) | Reflectance of amorphous portion (%) | Rating |
|---|---|---|---|---|
| 2-a | 10 | 15.4 | 4.5 | × |
| 2-b | 20 | 18.4 | 1.9 | ○ |
| 2-c | 40 | 19.2 | 1.5 | ○ |
| 2-d | 100 | 19.5 | 1.4 | ○ |
| 2-e | 200 | 19.6 | 1.3 | ○ |
| 2-f | 300 | 19.7 | 1.2 | ○ |
| 2-g | 400 | 19.7 | 1.2 | ○ |

As a result, it was found that the reflectance difference was over 16% with samples 2-b, 2-c, 2-d, 2-e, 2-f, and 2-g, in which the thickness of the reflective layer was between 20 and 400 nm, which means that sufficient contrast was obtained. Also, it was found that the reflectance difference was under 16% with sample 2-a, in which the thickness was 10 nm, which means that sufficient contrast was not obtained. Further, it was found that there was no additional increase in reflectance of the crystal portion with sample 2-g, in which the thickness was 400 nm, which means that from the standpoint of productivity, this is undesirable in terms of cost.

It can be concluded from the above results that it is preferable for the reflectance difference between the crystal and amorphous portions to be at least 16%, and the thickness of the reflective layer to be between 20 and 300 nm.

### INDUSTRIAL APPLICABILITY

The optical information recording medium and method for manufacturing the same pertaining to the present invention make it possible to realize an optical information recording medium, and a method for manufacturing the same, with excellent surface flatness of the reflective layer, and little inter-mark interference during recording, and are useful as a multilayer optical information recording medium, etc., for optically recording, erasing, rewriting, and reproducing information to and from a plurality of information layers by irradiation with a laser beam or the like.

## Claims

1. An optical information recording medium capable of reproducing information using laser light:
having at least a reflective layer and a recording layer, in that order, on a substrate; and
the reflective layer being an alloy containing aluminum and nickel.

2. The optical information recording medium according to Claim 1, wherein the reflective layer is an aluminum alloy containing at least 1 atom percent and no more than 10 atom percent nickel.

3. The optical information recording medium according to Claim 2, wherein the reflective layer is an aluminum alloy containing at least 1 atom percent and no more than 5 atom percent nickel.

4. The optical information recording medium according to any of Claims 1 to 3, wherein the reflective layer is formed as a film over the substrate.

5. The optical information recording medium according to any of Claims 1 to 4, wherein the thickness of the reflective layer is at least 20 nm and no more than 300 nm.

6. The optical information recording medium according to any of Claims 1 to 5, further comprising a cover layer, a reflective layer-side dielectric layer disposed between the reflective layer and the recording layer, and an incident light-side dielectric layer disposed between the recording layer and the cover layer.

7. The optical information recording medium according to Claim 6, wherein the reflective layer-side dielectric layer contains sulfur.

8. The optical information recording medium according to Claim 6 or 7, wherein the main component of the reflective layer-side dielectric layer is ZnS or an oxide, the main components of the recording layer are germanium and antimony, or germanium, bismuth, and tellurium, and the main component of the incident light-side dielectric layer is ZnS or an oxide.

9. The optical information recording medium according to any of Claims 6 to 8, wherein the thickness of the reflective layer-side dielectric layer is at least 15 nm and no more than 50 nm, the thickness of the recording layer is at least 5 nm and no more than 15 nm, and the thickness of the incident light-side dielectric layer is at least 10 nm and no more than 100 nm.

10. The optical information recording medium according to any of Claims 6 to 9, wherein the reflective layer-side dielectric layer is in contact with the reflective layer.

11. A method for manufacturing an optical information recording medium, including producing at least a reflective layer and a recording layer, in that order, on a substrate,
wherein producing a film of the reflective layer involves the use of a sputtering target composed of an alloy containing aluminum and nickel.

12. The method for manufacturing an optical information recording medium according to Claim 11, wherein the sputtering target is an aluminum alloy containing at least 1 atom percent and no more than 10 atom percent nickel.

13. The method for manufacturing an optical information recording medium according to Claim 12, wherein the sputtering target is an aluminum alloy containing at least 1 atom percent and no more than 5 atom percent nickel.

## Amended claims

### Amended claims under Art. 19.1 PCT

1. An optical information recording medium capable of reproducing information using laser light:
having at least a reflective layer and a recording layer, in that order, on a substrate; and
the reflective layer being an aluminum alloy containing at least 1 atom percent and no more than 5 atom percent nickel.

2. The optical information recording medium according to Claim 1, wherein the reflective layer is formed as a film over the substrate.

3. The optical information recording medium according to Claim 1 or 2, wherein the thickness of the reflective layer is at least 20 nm and no more than 300 nm.

4. The optical information recording medium according to Claim 1, 2, or 3, further comprising a cover layer, a reflective layer-side dielectric layer disposed between the reflective layer and the recording layer, and an incident light-side dielectric layer disposed between the recording layer and the cover layer.

5. The optical information recording medium according to Claim 4, wherein the reflective layer-side dielectric layer contains sulfur.

6. The optical information recording medium according to Claim 4 or 5, wherein the main component of the reflective layer-side dielectric layer is ZnS or an oxide, the main components of the recording layer are germanium and antimony, or germanium, bismuth, and tellurium, and the main component of the incident light-side dielectric layer is ZnS or an oxide.

7. The optical information recording medium according to any of Claims 4 to 6, wherein the thickness of the reflective layer-side dielectric layer is at least 15 nm and no more than 50 nm, the thickness of the recording layer is at least 5 nm and no more than 15 nm, and the thickness of the incident light-side dielectric layer is at least 10 nm and no more than 100 nm.

8. The optical information recording medium according to any of Claims 4 to 7, wherein the reflective layer-side dielectric layer is in contact with the reflective layer.

9. A method for manufacturing an optical information recording medium, including producing at least a reflective layer and a recording layer, in that order, on a substrate,
wherein the step of producing a film of the reflective layer involves the use of a sputtering target composed of an aluminum alloy containing at least 1 atom percent and no more than 5 atom percent nickel.
